# EUROPÄISCHE PATENTANMELDUNG

(11) **EP 2 567 756 A2**
(43) Veröffentlichungstag der Anmeldung: **13.03.2013**
(21) Anmeldenummer: 12183303.2
(22) Anmeldetag: 06.09.2012
(51) Int. Cl.: B05B 12/00, B05B 12/08, B05B 1/14

(54) **Vorrichtung zum Aufbringen eines Mediums auf ein Objekt und Verfahren zur Detektion von Abweichungen eines Sprühfeldes**

(30) Priorität: 07.09.2011 DE 102011112519
(71) Anmelder: Gottfried Wilhelm Leibniz Universität Hannover, 30167 Hannover (DE)
(72) Erfinder: Behrens, Bernd-Arno, 31177 Harsum (DE); Frischkorn, Conrad, 30167 Hannover (DE); Hoven, Nils, 31275 Lehrte (DE); Lüken, Ingo, 30165 Hannover (DE)
(74) Vertreter: Günther, Constantin

(57) **Zusammenfassung**

Eine Vorrichtung (1) zum Aufbringen eines Mediums auf ein Objekt (2a, 2b) wird beschrieben, die mindestens eine Sprühdüsenanordnung (4a, 4b) zum Sprühen eines Mediums in einem Sprühfeld (5a, 5b) als Sprühnebel in Richtung Objekt (2a, 2b) aufweist.

Benachbart zu der mindestens einen Sprühdüsenanordnung (4a, 4b) ist eine Elektrodenanordnung (7a, 7b) mit mindestens zwei Elektroden (10) angeordnet. Es ist eine Messeinheit (11) vorgesehen, die mit der Elektrodenanordnung (7a, 7b) zur Bestimmung mindestens einer Impedanz (RS₁-RS₄) zwischen jeweils einem Paar von Elektroden (10) der Elektrodenanordnung (7a, 7b) verbunden ist, wobei die Messeinheit (11) zur Detektion von Abweichungen des Sprühfeldes (5a, 5b) in Abhängigkeit der bestimmten mindestens einen Impedanz (RS₁-RS₄) eingerichtet ist.

## Beschreibung

Die Erfindung betrifft eine Vorrichtung zum Aufbringen eines Mediums auf ein Objekt mit mindestens einer Sprühdüsenanordnung zum Sprühen eines Mediums in einem Sprühfeld als Sprühnebel in Richtung Objekt zu sprühen.

Die Erfindung betrifft weiterhin ein Verfahren zur Detektion von Abweichungen des Sprühfeldes, in dem ein Medium mit einer Sprühdüsenanordnung zum Sprühen eines Mediums auf ein Objekt als Sprühnebel aufgesprüht wird.

In der Umformtechnik besteht oftmals die Notwendigkeit, auf ein zu behandelndes Werkstück (Objekt) ein Kühlmedium aufzubringen, um das Werkstück abzuschrecken. Hierzu wird das Kühlmedium oftmals in einem Sprühfeld als Sprühnebel auf eine größere Oberfläche des Objektes aufgebracht. Dabei gilt es grundsätzlich die Zusammensetzung des Kühlmediums, die Strömungsgeschwindigkeit des Kühlmediums und den Aufbau des Sprayfeldes als relevante Parameter während des Abschreckungsverfahrens zu kontrollieren. Solange das Sprühfeld eine optimale Kühlleistung bereitstellt, ist gewährleistet, dass die Zusammensetzung des Kühlmediums sowie die Strömungsgeschwindigkeit des Kühlmediums der gewünschten Qualität entsprechen. Bei einer Überwachung des Aufbaus des Sprühfeldes ist die Beobachtung der Parameter der Zusammensetzung des Kühlmediums und der Strömungsgeschwindigkeit des Kühlmediums dann obsolet. Eine unmittelbare Erfassung des Sprühfeldes kann somit den gesamten Fertigungsprozess kontrollieren.

Durch Überwachung des Vorgangs des Aufbringens des Mediums auf das Objekt ist es möglich, nicht erst das endbehandelte, z. B. gehärtete Werkstück zu kontrollieren. Vielmehr ist es durch die unmittelbare Detektion der Eigenschaft des Sprühfeldes möglich, den gesamten Fertigungsprozess selbst zu kontrollieren. Auf diese Weise wird nicht nur nach Abschluss des Bearbeitungsverfahrens mit der Qualitätssicherung eine Information im Hinblick darauf gewonnen, ob ein Fehler vorliegt. Vielmehr kann ein fehlerhafter Prozess frühzeitig erkannt werden und auch die Ursache für die Fehlerhaftigkeit des Prozesses festgestellt werden.

In der Umformtechnik, insbesondere in der Warmmassivumformung ist der Einsatz von Sensorsystemen für die prozessnahe Erfassung von Bauteileigenschaften mit einem hohen Aufwand verbunden. Die extremen Umgebungsbedingungen (hohe Temperaturen, starke Vibration, geschlossener Umformbereich) im Arbeitsbereich z. B. einer Presse stellen ein hohes Anforderungsprofil an die Sensorelemente. Daher wird die Produktqualität meist in einem nachgeschalteten Verfahren überwacht.

Eine entsprechende Vorrichtung zum Wärmebehandeln von metallischen Ringen durch Aufsprühen von Kühlmittel ist z. B. in der EP 0 996 751 B1 offenbart. Gleichermaßen beschreibt DE 10 2009 053 074 A1 eine Kühlvorrichtung zum Kühlen von Walzen eines Walzgerüstes mittels Niederdruck- und Hochdruckkühlung. Eine Ausführungsform sieht eine Sprühkühlung vor.

DE 1 121 849 A offenbart eine Vorrichtung zum Messen des Staubgehaltes strömender Gase und Dämpfe. Die Vorrichtung hat ein über eine Leitung geerdetes Rohrstück, in dem der Staubgehalt eines durch einen Kanal strömenden Gas-Staub-Gemisches kontaktelektrisch aufgeladen wird. In die Erdungsleitung des Aufladerohres ist ein Strommassgerät geschaltet. Die Größe des der elektrischen Wechselwirkung entsprechenden und von dem Strommessgerät angezeigten oder registrierten Ableitstromes ist ein Maß für den Staubgehalt des Gases.

DE 833 865 A beschreibt ein Verfahren und eine Einrichtung zur Ermittlung der Teilchengröße von Schwebeteilen in Gasen. Es erfolgt eine elektrische Aufladung von Staubteilchen mittels einer definierten und konstanten Sprühentladung, wobei anschließend die Ladung der Teilchen laufend oder intermittierend gemessen wird.

Aus DE 2 346 016 A ist die Verbindung mit einem Verfahren zur Feuchtigkeitsmessung beim lithographischen Drucken bekannt, wobei die auf die Oberfläche einer Druckplatte aufgebrachte Menge von Wasser bestimmt werden soll. Hierzu ist auf einem anderen Teil als die Druckplatte eine Feuchtigkeitsmessanordnung aufgebracht, wobei die Wassermenge auf der mit der Feuchtigkeitsmessanordnung gemessenen Oberfläche von der Wassermenge abhängig ist, die auf der Oberfläche der Druckplatte vorhanden ist. Das Verfahren erfordert damit, dass Wasser gleichmäßig über eine Fläche verteilt aufgetragen wird und dies auch im Prozessablauf gewährleistet ist.

EP 0 517 462 A1 offenbart ein Lithographie-Drucksystem mit einer Mehrzahl von neben einer Druckwalze angeordneten Sensoren zur Detektion des Vorhandenseins eines Überschusses von Dämpfungsflüssigkeit im Zwischenraum zwischen benachbarten Kontaktdämpfungslagern. Es erfolgt dabei eine Überwachung in Zonen.

Ausgehend hiervon ist es Aufgabe der vorliegenden Erfindung eine verbesserte Vorrichtung zum Aufbringen eines Mediums auf ein Objekt sowie ein verbessertes Verfahren zur Detektion von Abweichungen des Sprühfeldes, in dem ein Medium mit einer Sprühdüsenanordnung auf ein Objekt als Sprühnebel aufgesprüht wird, zu schaffen.

Die Aufgabe wird mit der Vorrichtung der eingangs genannten Art dadurch gelöst, dass benachbart zu der mindestens einen Sprühdüsenanordnung eine Elektrodenanordnung mit mindestens zwei Elektroden angeordnet ist und eine Messeinheit vorgesehen ist, die mit der Elektrodenanordnung zur Bestimmung mindestens einer Impedanz zwischen jeweils einem Paar von Elektroden der Elektrodenanordnung verbunden ist, wobei die Messeinheit zur Detektion von Abweichungen des Sprühfeldes in Abhängigkeit der bestimmten, mindestens einen Impedanz eingerichtet ist.

Durch die Bestimmung der Impedanz zwischen mindestens zwei Elektroden einer Elektrodenanordnung im Sprühfeld gelingt es, die Eigenschaften eines Sprühfeldes, in dem das Medium von einer Sprühdüsenanordnung in Richtung Objekt aufgesprüht wird, kontinuierlich und unmittelbar zu bestimmen. Die Bestimmung der Impedanz kann z. B. durch direkte oder indirekte Messung, wie z. B. als Spannungsabfall über einen Messwiderstand erfolgen.

Damit wird ausgenutzt, dass zwischen zwei in einem Sprühfeld eines als Sprühnebel aufgetragenen Mediums eine Impedanz messbar ist, die sich bei Änderung der Dichte des Mediums im Sprühfeld, d. h. der Sprühnebeldichte, signifikant ändert. Es hat sich gezeigt, dass sich der zwischen einer Messelektrode und einer Basiselektrode fließende Strom über den Sprühnebel verteilt und auch im Fehlerfall ein (verminderter) Strom fließt. Das Sprühfeld in der Umgebung der zurechenbaren Elektrode ist somit zu jedem Zeitpunkt detektierbar.

Besonders vorteilhaft ist es, wenn die Messeinheit derart mit der Messelektrodenanordnung verbunden ist, dass eine Gleichspannung zwischen mindestens einer Basiselektrode und mindestens einer Messelektrode anlegbar und die Messeinheit zur Bestimmung des jeweiligen Widerstandes zwischen jeweils einer Messelektrode und einer Basiselektrode im Sprühfeld in Abhängigkeit von dem zwischen dem jeweiligen Paar von Messelektrode und Basiselektrode fließenden Strom und zur Detektion von Abweichungen des Sprühfeldes in Abhängigkeit des gemessenen mindestens einen Widerstandes eingerichtet ist. Als Impedanz wird somit vorzugsweise der Gleichstromwiderstand, d. h. der Realteil der Impedanz, zwischen Messelektrode und zugeordneter Basiselektrode bestimmt und ausgewertet.

Die Messeinheit ist vorzugsweise zur kontinuierlichen Überwachung der Impedanz und zur Detektion von Änderungen der Eigenschaften des Sprühfeldes in Abhängigkeit von einer detektierten Impedanzänderung eingerichtet. Es wird somit vorgeschlagen, mögliche Abweichungen des Sprühfeldes, während des Prozesses des Aufsprühens eines Mediums auf ein Objekt anhand von bei der kontinuierlichen Überwachung festgestellten Trendänderungen zu erfassen. Nicht zu verhindernde Ausreißer von Messwerten können auf diese Weise im automatischen Prozess unberücksichtigt bleiben. Unter kontinuierlicher Überwachung wird auch eine intermittierende Überwachung über einen Zeitraum wiederholt durchgeführte Messungen verstanden.

Bei der kontinuierlichen Überwachung der Impedanz ist es vorteilhaft, wenn eine Mittelwertbildung von aufeinander folgenden Impedanzwerten erfolgt und bei einer signifikanten Änderung des Mittelwertes über vorgegebene Schwellwerte hinaus eine Abweichung des Sprühfeldes detektiert wird. Für die Mittelwertbildung kommen der arithmetische Mittelwert, der Median, der gleitende Mittelwert, der Modalwert oder ähnliches in Betracht.

Besonders vorteilhaft ist es, wenn eine Mehrzahl von Elektroden auf einer Ebene des Sprühfeldes angeordnet ist. Damit kann wenigstens eine Ebene des Sprühkegels des Sprühfeldes als flächiger Widerstand im Hinblick auf seine Konstanz überwacht werden. Durch die Nutzung einer Mehrzahl von auf einer Ebene des Sprühfeldes angeordneten Elektroden werden mehrere Impedanzwerte gemessen, die miteinander verglichen und hinsichtlich signifikanter Abweichungen ausgewertet werden können. Auf diese Weise können auch fehlerhafte Bereiche des Sprühdüsenausgangs der Sprühdüsenanordnung detektiert werden. Dies ist insbesondere für den Fall günstig, wenn der Sprühdüsenausgang mehrere voneinander unabhängige Düsen hat, die unter Umständen verstopft oder mindestens teilweise zugesetzt sind. Dies würde dann zu einer Veränderung der Sprühnebeldichte in dem entsprechenden Sprühbereich der defekten Sprühdüse führen, die als Impedanzänderung detektierbar ist.

Die Vorrichtung ist vorzugsweise mit einem Umformwerkzeug gekoppelt, wobei mindestens ein Sprühdüsenausgang der mindestens einen Sprühdüsenanordnung auf ein zugeordnetes Gesenk des Umformwerkzeugs ausgerichtet ist. Denkbar ist dabei, dass zwei entgegengesetzt gerichtete Sprühdüsenausgänge auf ein Obergesenk und ein Untergesenk jeweils ausgerichtet und auf einem gemeinsamen Träger angeordnet sind. Dann kann jeder der beiden in unterschiedliche, z. B. entgegengesetzte Richtungen ausgerichteten Sprühdüsenausgänge mit Hilfe einer entsprechend zugeordneten Elektrodenanordnung und einer eigenen oder einer gemeinsamen Messeinheit überwacht werden, um Abweichungen des jeweiligen Sprühfeldes zu detektieren.

Besonders vorteilhaft ist es, wenn die mindestens eine Sprühdüsenanordnung mindestens einen Sprühdüsenausgang in Form eines elektrisch leitenden Sprühkopfs hat, der eine Basiselektrode der Elektrodenanordnung bildet. Beabstandet zu dem Sprühkopf sind dann zwei oder mehr Messelektroden der Elektrodenanordnung auf einem Umfang verteilt angeordnet. Elektrodenspitzen der Messelektroden sind dann in einen Sprühkegel des Sprühfeldes hinein gerichtet. Auf diese Weise wird eine einfache und stabile Elektrodenanordnung geschaffen, die das Sprühfeld nicht signifikant beeinträchtigt. Durch die Nutzung des Sprühdüsenausgangs als gemeinsame Basiselektrode, d. h. insbesondere als Masselektrode, wird keine zentral im Sprühfeld angeordnete zusätzliche Elektrode benötigt, die das Sprühfeld dort beeinträchtigen könnte.

Die Elektrodenanordnung hat vorzugsweise zwei oder mehr parallel geschaltete Messelektroden und eine gemeinsame Basiselektrode, wobei jeweils die Impedanz zwischen einer Messelektrode und der gemeinsamen Basiselektrode bestimmt wird.

Besonders vorteilhaft ist es dabei, wenn die Messeinheit Schaltelemente hat, die mit den Messelektroden der Elektrodenanordnung derart gekoppelt sind, dass die Messelektroden sequenziell in einen Messzustand geschaltet werden, um sequenziell nacheinander die Impedanz zwischen einer in den Messzustand geschalteten Messelektrode und einer zugeordneten Basiselektrode zu bestimmen. Mit Hilfe der Schaltelemente gelingt es somit, nacheinander die einzelnen Impedanzen zwischen einem Paar von Messelektrode und Basiselektrode zu bestimmen, ohne dass die Impedanzmessung zwischen anderen Paaren von Mess- und Basiselektroden die Impedanzmessung beeinflusst. Auf diese Weise kann auch die räumliche Verteilung der Sprühnebeldichte im Sprühfeld bestimmt werden.

Die Aufgabe wird weiterhin mit dem Verfahren der eingangs genannten Art gelöst durch Bestimmen mindestens einer Impedanz zwischen jeweils einem Paar von Elektroden einer Elektrodenanordnung, die benachbart zu dem mindestens einen Sprühdüsenausgang angeordnet ist und mindestens zwei Elektroden hat, und durch Detektion von Abweichungen des Sprühfeldes, in Abhängigkeit der bestimmten mindestens einen Impedanz.

Vorteilhafte Ausführungsformen sind in den Unteransprüchen beschrieben.

Die Erfindung wird nachfolgend anhand eines Ausführungsbeispiels mit den beigefügten Zeichnungen näher erläutert. Es zeigen:
- Figur 1 -: Skizze einer Vorrichtung zum Aufbringen eines Mediums auf ein Objekt;
- Figur 2 -: Skizze einer Elektrodenanordnung mit drei Messelektroden in der Draufsicht;
- Figur 3 -: Blockdiagramm eines Verfahrens zur Detektion von Abweichungen eines Sprühfeldes;
- Figur 4 -: Diagramm einer beispielhaften Impedanzmessung mit vier Elektroden und einer signifikanten Sprühfeldabweichung im Bereich einer Elektrode über die Zeit;
- Figur 5 -: Diagramm einer beispielhaften Messung der Impedanz mit vier Elektroden im fehlerlosen Fall;
- Figur 6 -: Schaltdiagramm einer Messeinheit mit vier Messelektroden und einer Basiselektrode zur Impedanzmessung in einem Sprühfeld.

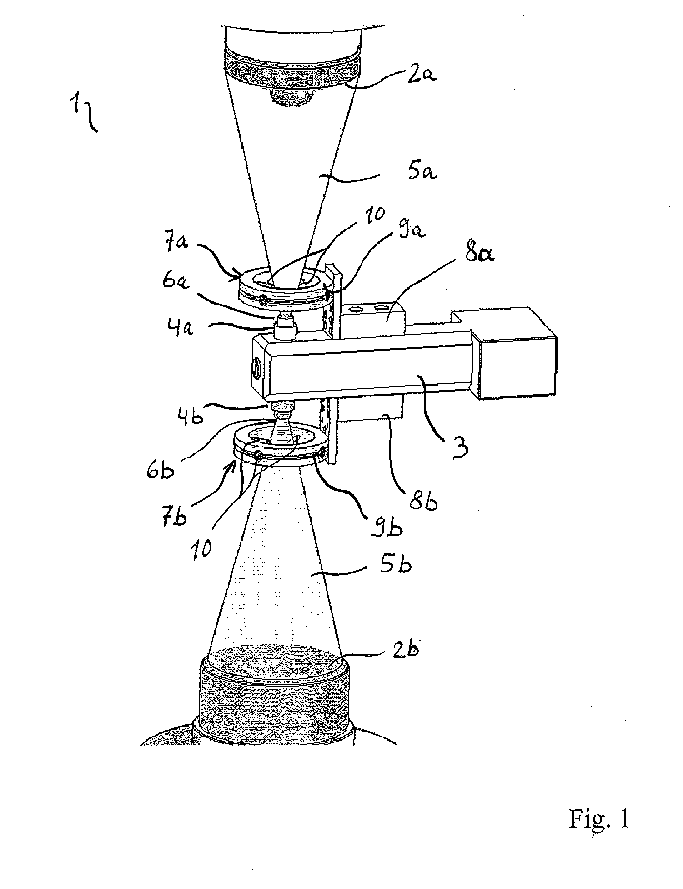

Figur 1 lässt eine Skizze 1 einer Vorrichtung zum Aufbringen eines Mediums auf ein Objekt 2a, 2b erkennen. Bei dem Objekt 2a, 2b kann es sich beispielsweise um ein Obergesenk 2a bzw. Untergesenk 2b einer Umformpresse handeln. In den Zwischenraum zwischen Obergesenk 2a und Untergesenk 2b ragt ein vorzugsweise in den Zwischenraum hineinfahrbarer Sprühbalken 3 hinein, an dem jeweils eine Sprühdüsenanordnung 4a, 4b an dessen freiem Ende vorgesehen ist. Die Sprühdüsenanordnungen 4a, 4b sind entgegengesetzt zueinander so ausgerichtet, dass die Sprühdüsenanordnung 4a das Medium in einem Sprühfeld 5a als Sprühnebel in Richtung des zugeordneten Objektes 2a (Obergesenk) und die untere Sprühdüsenanordnung 4b das Medium in einem Sprühfeld 5b auf das zugeordnete Objekt 2b (Untergesenk) sprüht. Erkennbar ist, dass das Sprühfeld 5a, 5b jeweils einen Sprühkegel ausbildet.

Die Sprühdüsenanordnungen 4a, 4b haben jeweils einen im Sprühbalken 3 untergebrachten Sprühdüseneingang und mindestens eine Sprühdüse mit einem Sprühdüsenausgang 6a, 6b.

Um nun während des Aufsprühens des Mediums auf ein Objekt 2a, 2b die Eigenschaften des Sprühfeldes 5a, 5b detektieren zu können, wird der flächige Gleichstromwiderstand (Realteil der Impedanz) in wenigstens einer Ebene des Sprühkegels des Sprühfeldes 5a, 5b im Hinblick auf seine Konstanz überwacht. Hierzu ist jeweils benachbart zu einer Sprühdüsenanordnung 4a, 4b eine zugeordnete Elektrodenanordnung 7a, 7b angeordnet. Jede Elektrodenanordnung 7a, 7b ist mit einer entsprechenden Halterung 8a, 8b an dem Sprühbalken 3 befestigt. Hierzu haben die Elektrodenanordnungen 7a, 7b jeweils Elektrodenhafterungen 9a, 9b, die ringförmig sind und einen Innendurchmesser haben, der wesentlich größer als der Sprühkegel im Bereich der Messebene ist. Auf diese Weise wird sichergestellt, dass der Sprühkegel ohne Beeinflussung des Sprühfeldes 5a, 5b durch die Elektrodenhalterung 9a, 9b durch die freie Öffnung im Innendurchmesser der ringförmigen Elektrodenhalterung 9a, 9b hindurchtreten kann.

An der Elektrodenhalterung 9a, 9b ist eine Anzahl von 1, 2, 3, 4 oder mehr Elektroden 10 angebracht, die stabförmig sind und sich von der ringförmigen Elektrodenhalterung 9a, 9b in Richtung Zentrum mit dem freien Ende in das Sprühfeld 5a, 5b hineinerstrecken.

Deutlich ist, dass die für die Elektroden 10 vorgesehenen Elektrodenhalterungen 9a, 9b weit außerhalb des Sprühkegels (Sprühfeld 5a, 5b) miteinander verbunden sind. Auf diese Weise wird sichergestellt, dass das Sprühfeld nicht nur durch die Elektrodenhalterungen 9a, 9b unbeeinflusst ist, sondern auch Messfehler verursachende Kriechströme unterbunden werden. Die jeweiligen Elektrodenhalterungen 9a, 9b sind vorzugsweise aus nicht leitendem Material, wie beispielsweise aus Kunststoffverbindungen gefertigt. Denkbar ist aber auch, dass die Elektrodenhalterungen 9a, 9b aus beschichteten Metallverbindungen hergestellt werden.

Vorteilhaft ist es, wenn die Elektroden 10 elektrisch isolierend beschichtet ausgeführt werden, wobei nur das freie zur Messung der Impedanz genutzte Ende und ein Anschlussbereich für eine Messleitung unbeschichtet bleibt.

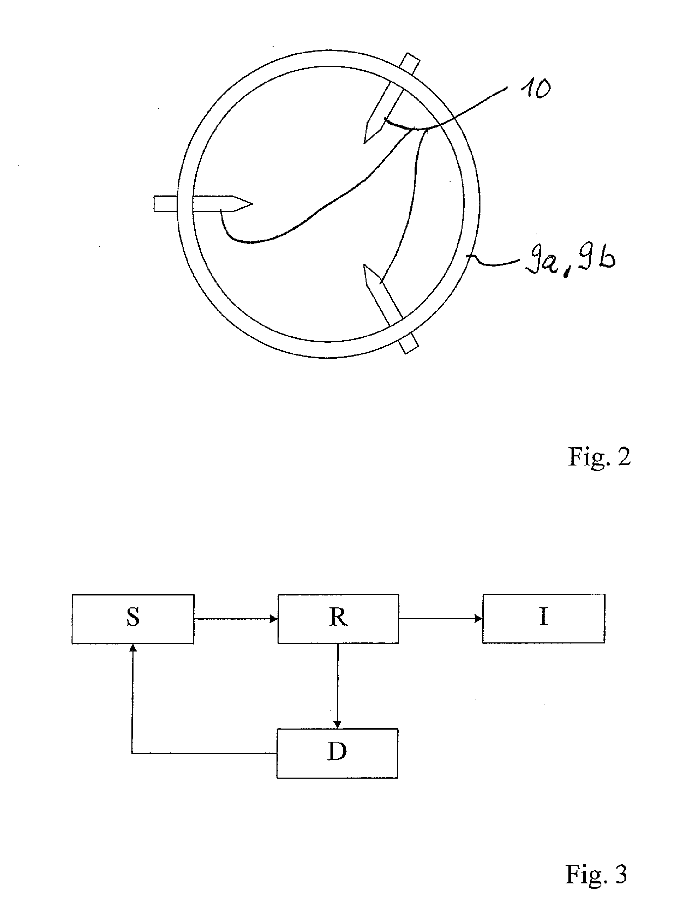

Figur 2 lässt eine Draufsicht auf die Elektrodenanordnung 9a, 9b aus Figur 1 erkennen. Deutlich wird, dass in der bevorzugten Variante 3 Elektroden über den Umfang gleich verteilt angeordnet sind. Die Elektroden sind dabei z. B. in einem Winkel von jeweils 120° zueinander ausgerichtet und erstrecken sich in Richtung des Zentrums der ringförmigen Elektrodenhalterungen 9a, 9b.

Die Elektroden 10 können beispielsweise in Bohrungen in den ringförmigen Elektrodenhalterungen 9a, 9b eingeschraubt werden. Damit ist eine Justierung der Elektroden 10 möglich.

Denkbar ist jedoch auch, eine andere Anzahl von Elektroden, wie beispielsweise 4 Elektroden gleich beabstandet in den Umfang der ringförmigen Elektrodenhalterungen 9a, 9b herum anzuordnen.

Zusätzlich ist es denkbar, einen Spritzschutz im Bereich der Elektrodenanordnung vorzusehen, um durch Spritzer verursachte Kriechströme zu vermeiden. Diese Alternative ist nicht weiter skizziert. Ein solcher Spritzschutz kann beispielsweise mit Absaug- und Gebläsevorrichtungen realisiert werden.

Figur 3 lässt ein Blockdiagramm eines Verfahrens zur Detektion von Abweichungen eines Sprühfeldes erkennen, bei dem ein Medium mit einer in Figur 1 dargestellten Vorrichtung auf ein Objekt aufgebracht wird. Durch das Verfahren gemäß Figur 3 wird gleichzeitig der Regelkreis verdeutlicht.

In einem Schritt S wird mindestens eine Impedanz zwischen einem Paar von Elektroden an einer Elektrodenanordnung direkt oder indirekt gemessen, d. h. bestimmt. Dieses kontinuierliche Messsignal wird dann einer Messeinheit zugeführt, in der der Schritt R der Detektion von Abweichungen des Sprühfeldes in Abhängigkeit der gemessenen mindestens einen Impedanz durchgeführt wird. Die Messeinheit kann vorzugsweise als Regeleinheit ausgeführt sein, um die Sprühdüsenanordnungen derart anzusteuern, dass eine Druckregelung D so erfolgt, dass das Sprühfeld die gewünschten Eigenschaften hat. Insbesondere kann eine Regelung des Sprühdrucks der Sprühdüsen der Sprühdüsenanordnungen in Abhängigkeit von der gemessenen Detektion von Abweichungen der Impedanz im Sprühfeld vorgenommen werden. Die Wirkung des Schritts der Druckregelung D fließt dann wieder in das Ergebnis des Schritts der Bestimmung S der Impedanz mit dem daraus resultierenden Messsignal ein.

Die detektierten Abweichungen des Sprühfeldes können von der Messeinheit als Information I ausgegeben werden.

Um Verfahrensfehler, wie beispielsweise Schatten in Bereichen des Sprühfeldes durch Verstopfung, von Messfehlern, die z. B. durch eine chaotische Anordnung des Sprühkegels bedingt sind, zu unterscheiden, werden die sich kontinuierlich oder intermittierend gemessenen Impedanzen an der jeweiligen Elektrode gemittelt. Dann kann nach Messung über einen längeren Zeitraum mit großer Wahrscheinlichkeit ein Verfahrensfehler von einem Messfehler unterschieden werden.

Eine weitere Möglichkeit zur Unterscheidung von Verfahrensfehlern von Messfehlern ist die sequenzielle, umlaufende Anschaltung der Elektroden. Dabei kann ein zur Bestimmung der Impedanz genutzter Strom immer nur durch eine Elektrode fließen, mit der Konsequenz, dass im Falle eines Verfahrensfehlers (Schatten durch Verstopfung) gar kein oder fast gar kein Strom fließt. Beim Vorliegen eines durch chaotische Verteilung verursachten Messfehlers über einen längeren Zeitraum fließt hingegen im jeweiligen Sprühkegelbereich ein vergleichsweise größerer Strom als beim Vorliegen eines Verfahrensfehlers.

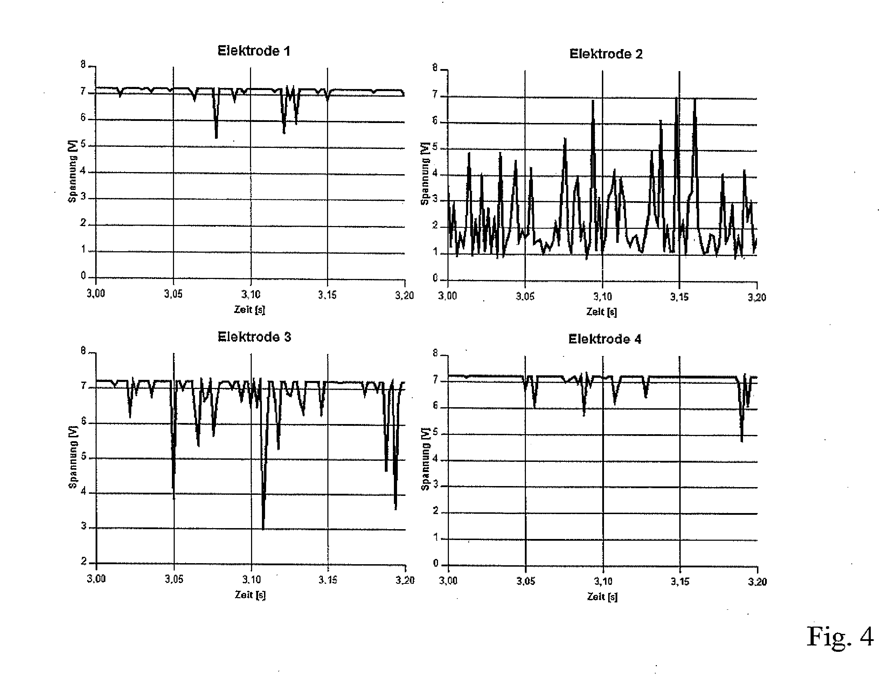

Figur 4 lässt ein Diagramm einer beispielhaften Impedanzmessung mit vier Elektroden 10a, 10b, 10c, 10d und einer signifikanten Sprühfeldabweichung im Bereich der vierten Elektrode 10d erkennen. Deutlich wird, dass die Impedanzwerte der Elektroden 10a bis 10c, in deren Bereich das Sprühfeld 5a, 5b ungestört ist, im oberen Wertebereich der gemessenen Impedanz liegen. Der Wert 7 ist hierbei ein Normwert, der von der gemessenen Impedanz in der Einheit Ohm abhängig ist.

An der vierten Elektrode 10d werden hingegen Impedanzwerte gemessen, die in ihrer Tendenz im unteren Impedanzwertebereich liegen und signifikant kleiner als die Impedanzwerte im oberen Bereich sind. Anhand dieses Unterschieds kann somit festgestellt werden, dass der Sprühkegel im Bereich der vierten Elektrode 10d, die durch die anderen Elektroden 10a, 10c gemessen wird, abweicht.

Eine solche Abweichung kann beispielsweise durch eine Verstopfung einer Spraydüse oder das Zusetzen eines Austrittsbereichs einer Sprühdüse sein, so dass der Sprühkegel einen Schatten aufweist.

Bei dem Verfahren zur Detektion von Abweichungen eines Sprühfeldes ist es wünschenswert, Verfahrensfehler von Messfehlern zu unterscheiden. Auftretende, zu erfassende Verfahrensfehler können dabei durch eine Beeinträchtigung des Sprühfeldes von außen (z. B. Düsenverstopfung) auftreten. Allerdings können Beeinträchtigungen durch Messfehler aufgrund des chaotischen Sprühfeldes auftreten, so dass ein eigentlicher Messfehler als Verfahrensfehler gedeutet wird. Während bei einem Verfahrensfehler der Sprühkegel einen Schatten aufweist und damit eine Messelektrode (so gut wie) nicht über eine längere Zeit zur Impedanzmessung zur Verfügung steht, da aufgrund des fehlenden Sprühfeldes kein leitendes Medium vorhanden ist, müsste eigentlich hier auf einen Systemfehler geschlossen werden. Genauso ist es möglich, dass über einen längeren Zeitraum ein bestimmter Bereich eines grundsätzlich validen Sprühkegels aufgrund der chaotischen Verteilung nicht als Widerstand dient. In diesem Falle würde ein Messfehler vorliegen.

Es hat sich jedoch gezeigt, dass sich der zwischen einer Messelektrode und einer Basiselektrode fließende Strom über den Sprühnebel verteilt. Dies hat zur Folge, dass über jede Messelektrode ständig ein Strom abfließt, auch wenn der Messstrom möglicherweise relativ klein ist. Das heißt, dass auch im Fehlerfall immer noch eine Impedanz, wie in Figur 4 skizziert, gemessen wird.

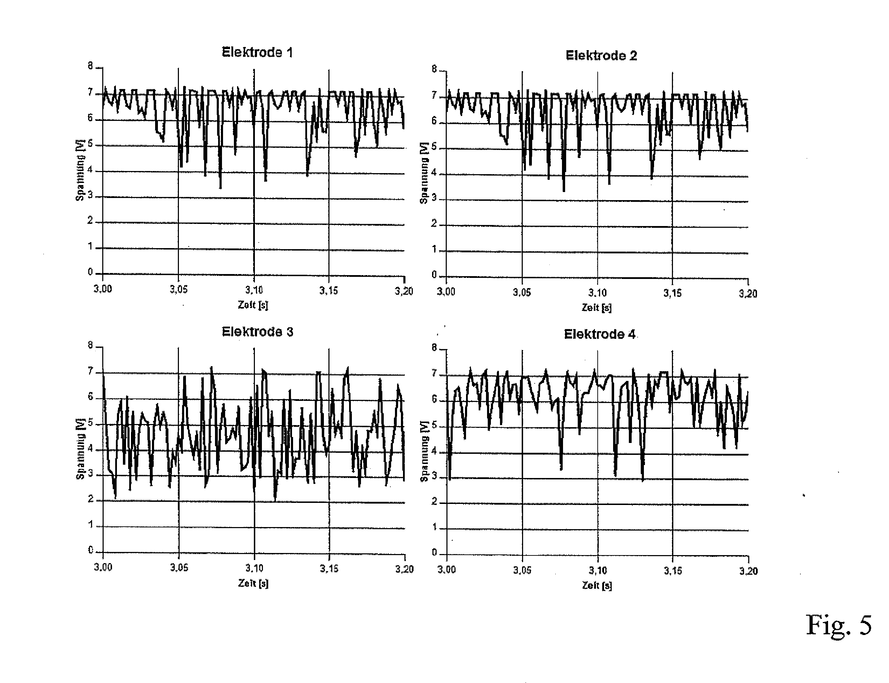

Figur 5 lässt ein Diagramm einer beispielhaften Bestimmung über Impedanz mit vier Elektroden 10a, 10b, 10c, 10d im fehlerlosen Fall erkennen. Deutlich wird, dass die Impedanz sämtlicher Elektroden 10a bis 10d signifikant in einem oberen Impedanzbereich streuen. Eine Mittelung der gemessenen Impedanzwerte würde zur Glättung der dargestellten Kurven führen, so dass die interessierenden eher langfristigen Eigenschaftsänderungen von dem dargestellten Normfall gut zu unterscheiden sind.

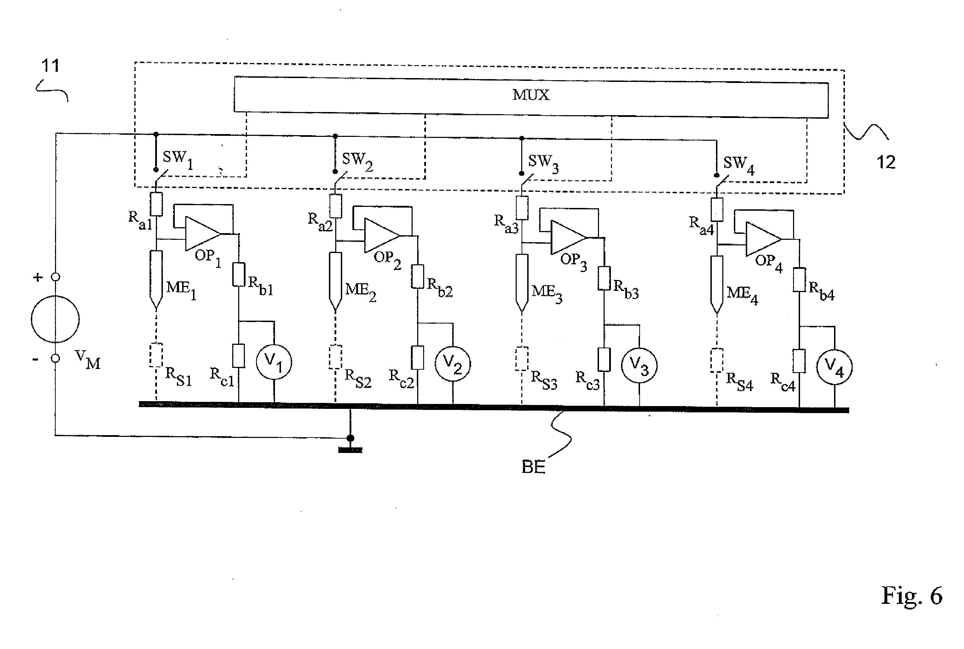

Figur 6 lässt ein Schaltdiagramm einer Messeinheit mit vier Messelektroden und einer Basiselektrode zur Impedanzmessung in einem Sprühfeld erkennen. Die Messeinheit 11 hat eine Gleichspannungsquelle V_{M} oder ist an eine solche angeschlossen. Der negative Pol bzw. Massepol ist an eine Basiselektrode BE angeschlossen, die als gemeinsame Basiselektrode BE für alle zur Impedanzmessung vorgesehenen Messelektroden ME₁, ME₂, ME₃ und ME₄ dient. Der positive Pol der Spannungsquelle V_{M} ist an eine Schalteinheit 12 mit jeweils einem Schalter SW₁, SW₂, SW₃ und SW₄ für jede Messelektrode ME₁ bis ME₄ und einem Steuerelement MUX zur sequenziellen Anschaltung der Schalter SW₁ bis SW₄ hintereinander verbunden. Das Steuerelement MUX kann beispielsweise ein Multiplexer oder mittels eines Taktsignals gesteuerter Zähler sein. Auf diese Weise wird sequentiell durch Schließen der einzelnen Schalter SW₁, SW₂, SW₃ und SW₄ nacheinander jeweils eine Messelektrode ME₁, ME₂, ME₃ und ME₄ mit einer Gleichspannung am Gleichspannungspotential beaufschlagt. Hierzu ist zwischen Messelektrode ME₁ bis ME₄ und zugeordnetem Schalter SW₁ bis SW₄ jeweils ein Widerstand Rₐ₁ bis Rₐ₄ zur Bildung eines Spannungsteilers zur Strombegrenzung vorhanden. Wenn die jeweilige angeschaltete Messelektrode ME₁ bis ME₄ in Bezug auf die Basiselektrode BE bzw. das Massepotential bis ME₄ und der Basiselektrode BE auf einem Messspannungspotential liegt, fließt aufgrund des im Zwischenraum zwischen Messelektrode ME₁ bis ME₄ und Basiselektrode BE befindlichen vernebelten Mediums ein Strom, so dass die Impedanz R_{S1} bis R_{S4} bestimmt werden kann. Hierzu ist für jede Messelektrode ME₁ bis ME₄ jeweils ein Operationsverstärker OP₁ bis OP₄ vorgesehen, die als Spannungsfolger verschaltet sind. Hierdurch wird eine Irnpedanzanpassung vorgenommen, um aus dem relativ hochohmigen Spannungseingang eine niederohmige, durch eine Folgeschaltung belastbare Spannungsquelle zu erhalten. An den Ausgang der jeweiligen Operationsverstärker OP₁ bis OP₄ ist ein Spannungsteiler mit den jeweils in Reihe geschalteten Widerständen R_{b1} und R_{c1}; R_{b2} und R_{c2}; R_{b3} und R_{c3}; R_{b4} und R_{c4} angeschlossen, die mit der Basiselektrode BE und damit dem Massepotential verbunden sind. Dann kann die Messspannung V₁, V₂, V₃, V₄ gemessen werden, die über die Widerstände R_{c1}, R_{c2}, R_{c3} bzw. R_{c4} anliegt. Diese Messspannung V₁, V₂, V₃ und V₄ ist jeweils proportional zum Realteil der Impedanz R_{S1}, R_{S2}, R_{S3}, R_{S4} zwischen der jeweiligen Messelektrode ME₁ bis ME₄ und der Basiselektrode BE.

Mit Hilfe der Schalteinheit 12 mit den Schaltern SW₁ bis SW₄ gelingt die Unterscheidung von Verfahrensfehlern von Messfehlern durch sequenzielle, umlaufende Anschaltung jeweils einer Messelektrode ME₁ bis ME₄ an das Mess-Gleichspannungspotential. Damit wird sichergestellt, dass ein Strom immer nur durch eine Elektrode ME₁ bis ME₄ fließen kann. Im Falle eines Verfahrensfehlers (z. B. Abschaltung eines Abschnitts des Sprühkegels durch Verstopfung einer Düse) fließt dann an der aktivierten Messelektrode ME₁ bis ME₄ gar kein oder fast gar kein Strom. Beim Vorliegen eines durch chaotische Verteilung verursachten Messfehlers über einen längeren Zeitraum im jeweiligen Sprühkegelbereich würde hingegen nach mehreren aufeinander folgenden Messungen an einer Messelektrode ME₁ bis ME₄ ein vergleichsweise größerer Strom fließen, als beim Vorliegen eines Verfahrensfehlers.

Die notwendige Messspannung und damit die Versorgungsspannung V_{M} kann vergleichsweise klein ausfallen, so dass die Gleichspannungsversorgung mittels Akkus oder einer Solarzelle denkbar ist. Damit kann auch eine Mobilität der Vorrichtung gewährleistet werden.

Bestehende Maschinen können mit der Vorrichtung gleich nachgerüstet werden, wobei die Vorrichtung zur Kontrolle in vielerlei Bereichen einschließlich der Härtung von Werkstücken im Umformprozess eingesetzt werden kann, bei dem elektrisch leitende Medien genutzt werden.

## Patentansprüche

1. Vorrichtung (1) zum Aufbringen eines Mediums auf ein Objekt (2a, 2b) mit mindestens einer Sprühdüsenanordnung (4a, 4b) zum Sprühen eines Mediums in einem Sprühfeld (5a, 5b) als Sprühnebel in Richtung Objekt (2a, 2b), **dadurch gekennzeichnet, dass** benachbart zu der mindestens einen Sprühdüsenanordnung (4a, 4b) eine Elektrodenanordnung (7a, 7b) mit mindestens zwei Elektroden (10) angeordnet ist und eine Messeinheit (11) vorgesehen ist, die mit der Elektrodenanordnung (7a, 7b) zur Bestimmung mindestens einer Impedanz (R_{S1}-R_{S4}) zwischen jeweils einem Paar von Elektroden (10, ME₁-ME₄, BE) der Elektrodenanordnung (7a, 7b) verbunden ist, wobei die Messeinheit (11) zur Detektion von Abweichungen des Sprühfeldes (5a, 5b) in Abhängigkeit der bestimmten mindestens einen Impedanz (R_{S1}-R_{S2}) eingerichtet ist.

2. Vorrichtung (1) nach Anspruch 1, **dadurch gekennzeichnet, dass** die Messeinheit (11) derart mit der Elektrodenanordnung (7a, 7b) verbunden ist, dass eine Gleichspannung zwischen mindestens einer Basiselektrode (BE) und mindestens einer Messelektrode (ME₁-ME₄) anlegbar und die Messeinheit (11) zur Bestimmung des jeweiligen Widerstandes (R_{S1}-R_{S4}) zwischen jeweils einer Messelektrode (ME₁-ME₄) und einer Basiselektrode (BE) im Sprühfeld in Abhängigkeit von dem zwischen dem jeweiligen Paar von Messelektrode (ME₁-ME₄) und Basiselektrode (BE) fließenden Strom und zur Detektion von Abweichungen des Sprühfeldes (5a, 5b) in Abhängigkeit des gemessenen mindestens einen Widerstandes (R_{S1}-R_{S4}) eingerichtet ist.

3. Vorrichtung (1) nach Anspruch 1, **dadurch gekennzeichnet, dass** die Messeinheit (11) zur kontinuierlichen Überwachung der Impedanz (R_{S1}-R_{S4}) und Detektion von Änderungen der Eigenschaften des Sprühfeldes (5a, 5b) in Abhängigkeit von einer detektierten Impedanzänderung eingerichtet ist.

4. Vorrichtung (1) nach einem der vorhergehenden Ansprüche, **dadurch gekennzeichnet, dass** eine Mehrzahl von Elektroden (10, ME₁-ME₄, BE) auf einer Ebene des Sprühfeldes (5a, 5b) angeordnet ist.

5. Vorrichtung (1) nach einem der vorhergehenden Ansprüche, **dadurch gekennzeichnet, dass** die Vorrichtung (1) mit einem Umformwerkzeug gekoppelt und mindestens ein Sprühdüsenausgang (6a, 6b) der mindestens einen Sprühdüsenanordnung (4a, 4b) auf ein zugeordnetes Gesenk des Umformwerkzeuges ausgerichtet ist.

6. Vorrichtung (1) nach einem der vorhergehenden Ansprüche, **dadurch gekennzeichnet, dass** die mindestens eine Sprühdüsenanordnung (4a, 4b) mindestens einen Sprühdüsenausgang (6a, 6b) in Form eines elektrisch leitfähigen Sprühkopfs hat, der eine Basiselektrode (BE) der Elektrodenanordnung (7a, 7b) bildet, und dass beabstandet zu dem Sprühkopf zwei oder mehr Messelektroden (ME₁-ME₄) der Elektrodenanordnung (7a, 7b) auf einem Umfang verteilt angeordnet und mit Elektrodenspitzen der Messelektroden (ME₁-ME₄) in einen Sprühkegel (5a, 5b) des Sprühfeldes hinein gerichtet sind.

7. Vorrichtung (1) nach einem der vorhergehenden Ansprüche, **dadurch gekennzeichnet, dass** die Elektrodenanordnung (7a, 7b) zwei oder mehr parallel geschaltete Messelektroden (ME₁-ME₄) und eine gemeinsame Basiselektrode (BE) hat, wobei jeweils die Impedanz (R_{S1}-R_{S4}) zwischen einer Messelektrode (ME₁-ME₄) und der gemeinsamen Basiselektrode (BE) bestimmt wird.

8. Vorrichtung (1) nach Anspruch 7, **dadurch gekennzeichnet, dass** die Messeinheit (11) Schaltelemente (SW₁-SW₄) hat, die mit den Messelektroden (ME₁-ME₄) der Elektrodenanordnung (7a, 7b) derart gekoppelt sind, dass die Messelektroden (ME₁-ME₄) sequentiell in einen Messzustand geschaltet werden, um sequentiell nacheinander die Impedanz (R_{S1}-R_{S4}) zwischen einer in den Messzustand geschalteten Messelektrode (ME₁-ME₄) und einer zugeordneten Basiselektrode, (BE) zu bestimmen.

9. Verfahren zur Detektion von Abweichungen eines Sprühfeldes (5a, 5b), indem ein Medium mit einer Sprühdüsenanordnung (4a, 4b) auf ein Objekt als Sprühnebel aufgesprüht wird, **gekennzeichnet durch**
a) Bestimmen mindestens einer Impedanz (R_{S1}-R_{S4}) zwischen jeweils einem Paar von Elektroden (10; ME₁-ME₄; BE) einer Elektrodenanordnung (7a, 7b), die benachbart zu einer zugeordneten Sprühdüsenanordnung (4a, 4b) angeordnet ist und mindestens zwei Elektroden (10; ME₁-ME₄; BE) hat, und
b) Detektion von Abweichungen des Sprühfeldes (5a, 5b) in Abhängigkeit der im Schritt a) bestimmten mindestens einen Impedanz (R_{S1}-R_{S4}).

10. Verfahren nach Anspruch 9, **gekennzeichnet durch** kontinuierliche Überwachung der Impedanz (R_{S1}-R_{S4}) und Detektion von Änderungen der Eigenschaften des Sprühfeldes (5a, 5b) in Abhängigkeit von einer detektierten Impedanzänderung.

11. Verfahren nach einem der Ansprüche 9 oder 10, **gekennzeichnet durch** fortlaufendes, sequentielles Bestimmen der Impedanz (R_{S1}-R_{S4}) zwischen jeweils einem Paar von Messelektrode (ME₁-ME₄) und Basiselektrode (BE) der Elektrodenanordnung (7a, 7b), bei der zwei oder mehr Messelektroden (ME₁-ME₄) im Umfang verteilt im Sprühfeld (5a, 5b) angeordnet sind, derart, dass sequentiell nacheinander die Impedanz (R_{S1}-R_{S4}) jeweils zwischen einer Messelektrode (ME₁-ME₄) und einer gemeinsamen Basiselektrode (BE) für die zwei oder mehr Messelektroden (ME₁-ME₄) bestimmt wird.
